# EUROPEAN PATENT SPECIFICATION

(11) **EP 2 423 087 B1**
(45) Date of publication and mention of the grant of the patent: **04.05.2016**
(21) Application number: 11179076.2
(22) Date of filing: 26.08.2011
(51) Int. Cl.: B62J 17/00, B62K 11/10, B62M 6/90

(54) **ELECTRIC VEHICLE WITH TWO BATTERIES AND A CHARGER**
ELEKTRISCHES FAHRZEUG MIT ZWEI BATTERIEN UND LADEEINHEIT.
Véhicule électrique avec deux batteries et un chargeur

(30) Priority: 27.08.2010 TW 099128910
(43) Date of publication of application: 29.02.2012
(73) Proprietor: Kwang Yang Motor Co., Ltd., Kaohsiung (TW)
(72) Inventor: Hsu, Yung-Chiang, 813 Kaohsiung City (TW)
(74) Representative: Regimbeau

(56) References cited:
- EP-A1- 1 743 834
- EP-A2- 0 728 613
- FR-A1- 2 669 585
- JP-A- 5 139 365
- JP-A- 6 219 359
- JP-A- 2007 204 008
- US-A- 5 477 936
- US-A- 5 931 245
- US-A1- 2003 213 632
- US-B1- 6 326 765

## Description

The invention relates to a vehicle, more particularly to an electric vehicle using batteries as the power source thereof.

In this age, motor-driven vehicles are increasing in huge numbers year by year, which results in enormous demand for oil. Consequently, the price of oil has skyrocketed in recent years and oil resources are diminishing quickly. Moreover, an effective solution of the air pollution and low fuel efficiency problems caused by the motor-driven vehicles due to incomplete combustion of oil has yet to be found. Therefore, utilization of replacement power sources has become a very critical issue today. An electricity-driven vehicle, for example, is considered to be a substitute for the motor-driven vehicles.

Conventional electric vehicles, according to the preamble of claim 1, have been described in documents US 2003/213632 A1, US 6326765 B1, US 5931245 A and JP 5139365 A.

A conventional electric vehicle usually includes only one battery disposed beneath the floorboard thereof or in the compartment under the seat pad. However, as the demand for more horsepower for the electric vehicles arises, the capacity of the batteries has to increase accordingly. Moreover, the endurance of the single battery is oftentimes insufficient for use, and therefore cannot meet the requirement of the rising demand.

Furthermore, the battery has to be taken out of the conventional electric vehicle for charging. Since the weight of the battery may reach up to several kilograms, the action to remove the battery is relatively strenuous. Accidental fall of the battery during the removal thereof may result in damage to the battery or even injury to the operator. Therefore, the main object of the present invention is to provide an electric vehicle that has a relatively high endurance and that is convenient to recharge.

Accordingly, an electric vehicle of the present invention includes a frame unit covered by a covering unit, a seat mounted on the covering unit, a power supply unit and a charging unit.

The frame unit includes a head tube, a main tube that is connected securely to a rear side of the head tube, and a pair of side tubes, each of which has a segment connected securely to the main tube, a floorboard connecting segment extending rearwardly from the descending segment, and a supporting segment extending rearwardly and upwardly from the floorboard connecting segment. The seat is disposed above the supporting segments of the side tubes

The power supply unit includes a first battery that is coupled to the floorboard connecting segments of the side tubes and a second battery that is disposed under the seat and that is connected electrically to the first battery.

The charging unit includes a charger that is disposed in the covering unit for charging the first and second batteries, and a socket that is disposed at the covering unit and that is connected electrically to the charger.

Other features and advantages of the present invention will become apparent in the following detailed description of the preferred embodiment with reference to the accompanying drawings, of which:
Figure 1 is a schematic side view of a frame unit, a power supply unit and a charging unit of the preferred embodiment of an electric vehicle according to the present invention;
Figure 2 is a fragmentary partly exploded perspective view for illustrating the preferred embodiment in more detail, wherein a covering unit is omitted for convenience of illustration;
Figure 3 is a view similar to Figure 1, but illustrating an angular variation of a first battery of the power supply unit;
Figure 4 is another view similar to Figure 1, but illustrating another angular variation of the first battery;
Figure 5 is a fragmentary partly exploded perspective view of the preferred embodiment for illustrating a modified frame unit;
Figure 6 is a fragmentary rear view of the preferred embodiment for illustrating the location of a socket of the charging unit;
Figure 7 is a block diagram for illustrating electrical connection between the power supply unit and a charger of the charging unit;
Figure 8 is another block diagram for illustrating electrical connection among the power supply unit, the charger, a relay and a control device;

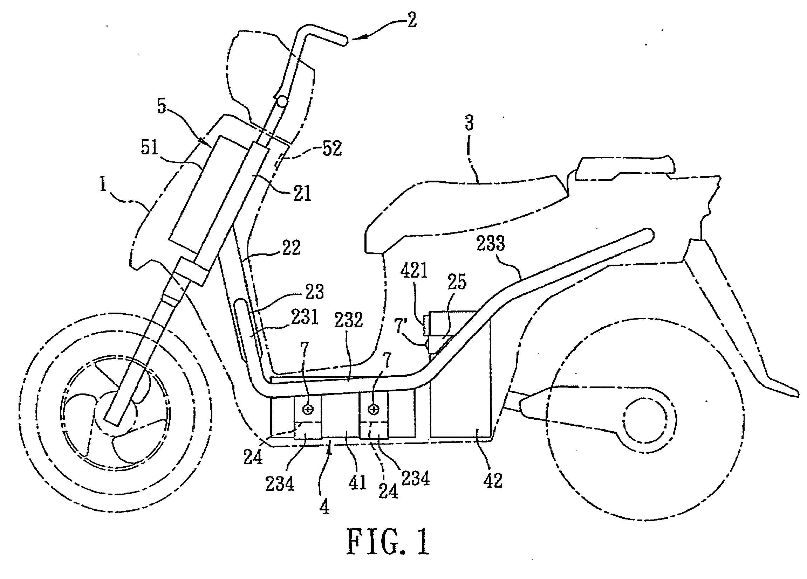

Referring to Figure 1, the preferred embodiment of an electric vehicle according to the present invention is shown to include a frame unit 2 covered by a covering unit 1, a seat 3 mounted on the covering unit a, a power supply unit 4 mounted on the frame unit 2, and a charging unit 5 mounted on the frame unit 2 for charging the power supply unit 4.

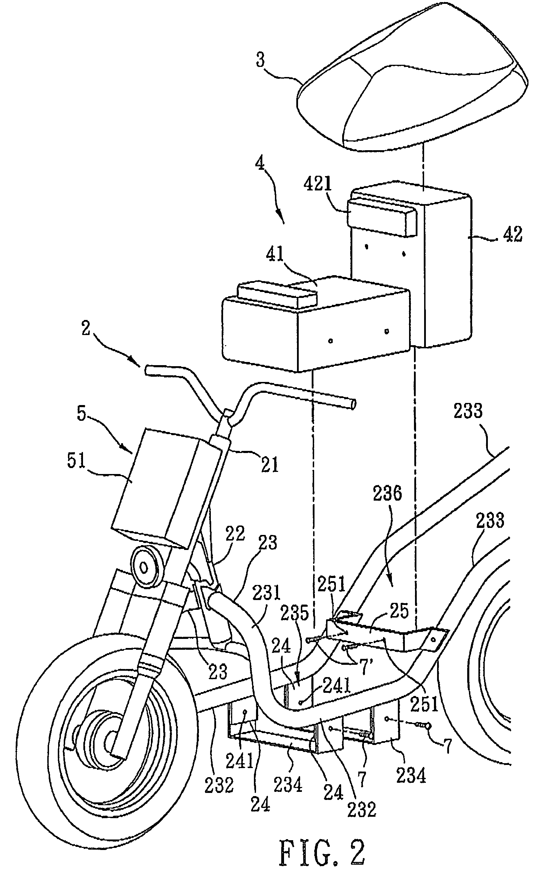

Further referring to Figure 2, the frame unit 2 includes a head tube 21, a main tube 22 that is connected securely to a rear side of the head tube 21, a pair of side tubes 23, a plurality of locking plates 24, and a support frame 25. Each of the side tubes 23 has a descending segment 231 connected securely to the main tube 22, a floorboard connecting segment 232 extending rearwardly from the descending segment 231, and a supporting segment 233 extending rearwardly and upwardly from the floorboard connecting segment 232. The frame unit 2 further includes a pair of spaced-apart U-shaped retaining plates 234 interconnecting the floorboard connecting segments 232 of the side tubes 23 and cooperating with the floorboard connecting segments 232 to define a first receiving space 235. The supporting segments 233 of the side tubes 23 cooperate with each other to define a second receiving space 236 under the seat 3. The seat 3 is disposed above the supporting segments 233 of the side tubes 23.

The power supply unit 4 includes a first battery 41 that is coupled to the floorboard connecting segments 232 of the side tubes 23 and that is retained in the first receiving space 235, and a second battery 42 that is disposed under the seat 3, that is retained in the second receiving space 236, and that is connected electrically to the first battery 41. In this embodiment, the first battery 41 is horizontally disposed, whereas the second battery 42 is vertically disposed, i.e., the first and second batteries 41, 42 are disposed in an L-shaped arrangement.

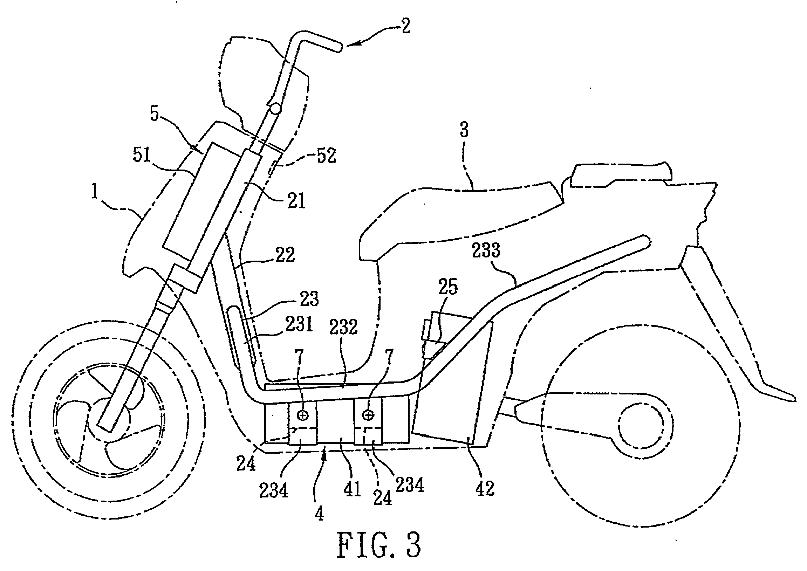

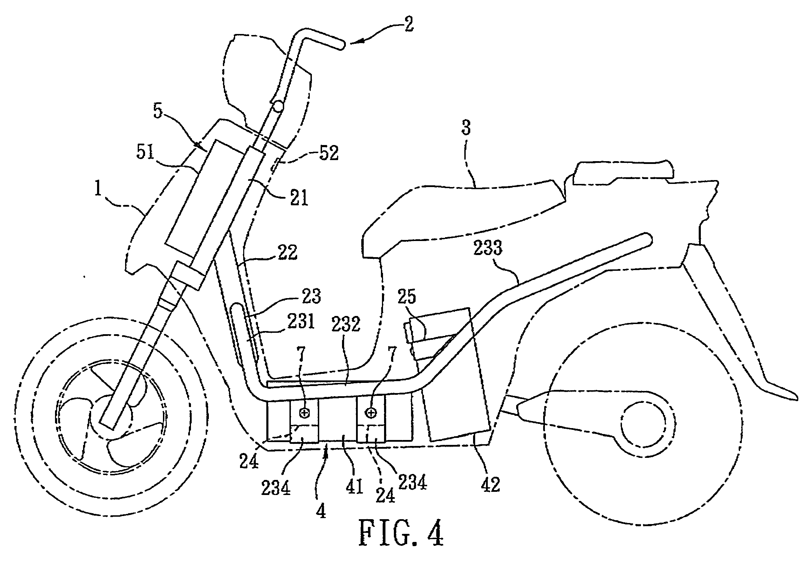

While in this embodiment, the second battery 42 is vertically disposed, the disposition of the second battery 42 should not be limited thereto. For example, the second battery 42 may as well be disposed in other manners, such as being disposed obliquely toward the rear of the vehicle body as shown in Figure 3, or being disposed obliquely toward the front of the vehicle body as shown in Figure 4.

The locking plates 24 extend from the floorboard connecting segments 232 of the side tubes 23. Each of the locking plates 24 is formed with a first locking hole 241. The electric vehicle of this invention further includes a plurality of first locking members 7 that extend through the retaining plates 234 and that extend respectively through the first locking holes 241 for securing fixedly the locking plates 24 and the retaining plates 234 to the first battery 41. In this embodiment, the support frame 25 is mounted on the supporting segments 233, and is formed with a plurality of second locking holes 251. The electric vehicle further includes a plurality of second locking members 7' extending respectively through the second locking holes 251 for securing fixedly the support frame 25 to the second battery 42. The second battery 42 has a projecting portion 421 disposed over and abutting against the support frame 25 for firmly supporting the second battery 42 when the support frame 25 and the second battery 42 are engaged and interlocked. The side tubes 23 may be provided with a holding frame (not shown in the Figures) functioning similar to the retaining plates 234 for supporting firmly the second battery 42.

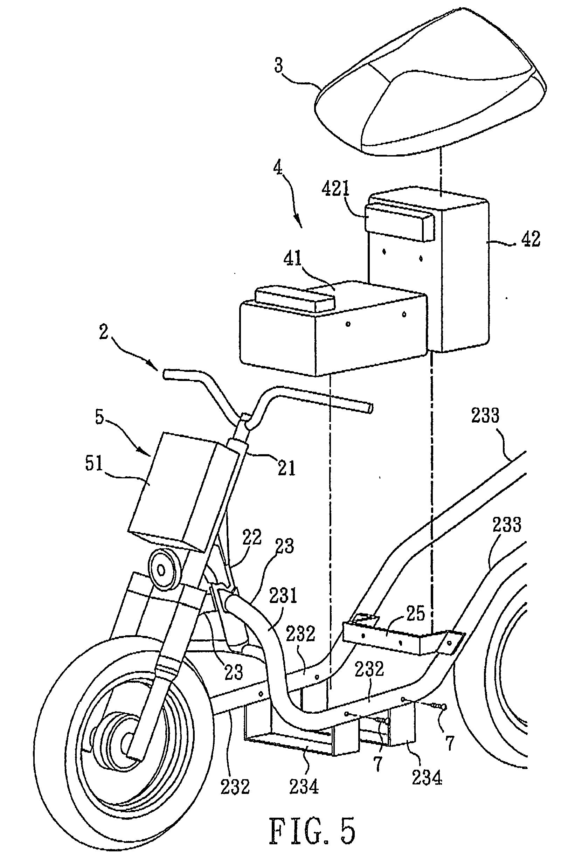

It may as well be configured that, as shown in Figure 5, the first locking members 7 just penetrate directly and transversely through the floorboard connecting segments 232 to engage the first battery 41 directly with omission of the locking plates 24. The aforementioned implementation manners are selected according to the actual manufacturing process, and are not limited to what is disclosed herein.

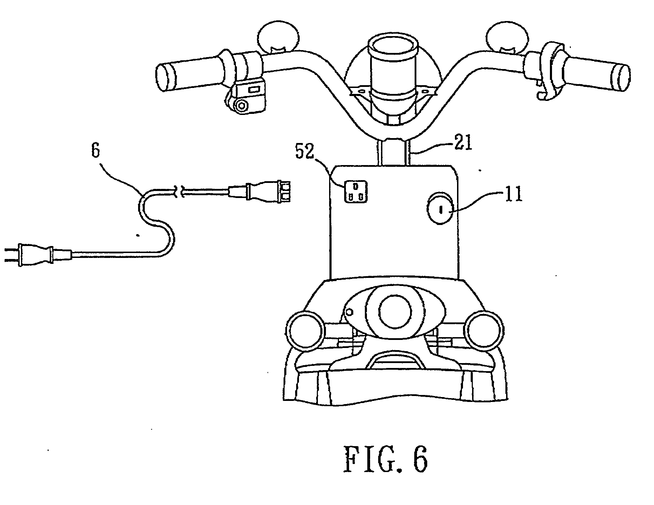

In this embodiment, the charging unit 5 includes a charger 51 that is disposed in the covering unit 1 and in front of the head tube 21 for charging the first and second batteries 41, 42, and a socket 52 that is disposed at the covering unit 1 and that is connected electrically to the charger 51 (shown in Figure 1). As further shown in Figure 6, the socket 52 is disposed behind the head tube 21 and proximate to the charger 51, and is spaced apart from an ignition keyhole 11 which is also provided at the covering unit 1.

Compared to the abovementioned conventional electric vehicle, the two-battery configuration effectively increases the endurance. Moreover, the L-shaped arrangement of the first and second batteries 41, 42 fully utilizes the space between the floorboard connecting segments 232 of the side tubes 23 and the space beneath the seat 3. Referring once again to Figure 6, when the first and second batteries 41, 42 need to be charged, a cable 6 is required with one end being connected to a commercial power source and the other end being connected to the socket 52. Since the first and second batteries 41, 42 are not required to be removed from the covering unit 1, the trouble and potential hazard of moving the first and second batteries 41, 42 can be avoided.

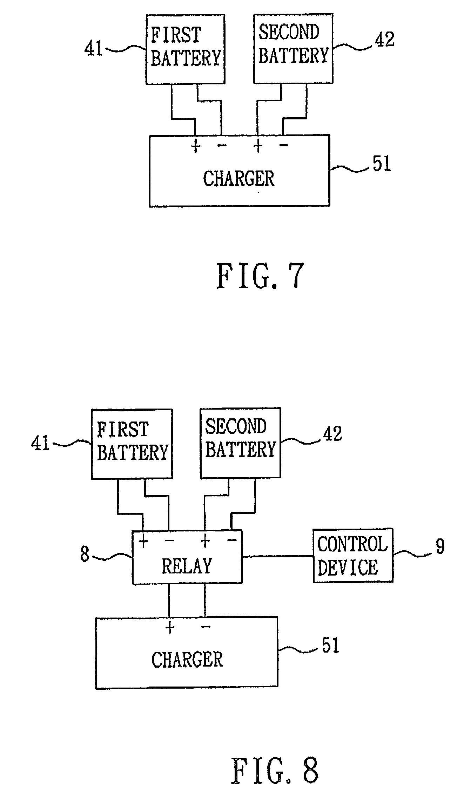

It should be noted that, the charger 51 can be used to charge the first and second batteries 41, 42 simultaneously as shown in Figure 7, and the charging operation automatically terminates when the power recharging is completed. It may as well be configured as shown in Figure 8, wherein a relay 8 is provided to interconnect electrically the charger 51 and the first and second batteries 41, 42, and a controller 9 is provided to be connected electrically to the relay 8 for controlling the charging of one of the first and second batteries 41, 42 via the relay 8 in a manner that, for example, charging of the second battery 42 is actuated after charging of the first battery 41 is completed, and the charging operation of the charger 51 automatically terminates after the charging of the second battery 42 is completed.

## Claims

1. An electric vehicle comprising:
a covering unit (1);
a frame unit (2) covered by said covering unit (1) and including a head tube (21), a main tube (22) that is connected securely to a rear side of said head tube (21), and a pair of side tubes (23), each of which has a descending segment (231) connected securely to said main tube (22), a floorboard connecting segment (232) extending rearwardly from said descending segment (231), and a supporting segment (233) extending rearwardly and upwardly from said floorboard connecting segment (232) ;
a seat (3) mounted on said covering unit (1) and disposed above said supporting segments (233) of said side tubes (23);
a power supply unit (4) including a first battery (41) that is coupled to said floorboard connecting segments (232) of said side tubes (23) and a second battery (42) that is disposed under said seat (3) and that is connected electrically to said first battery (41);
**characterized in that** it further comprises a charging unit (5) including:
a charger (51) for charging said first and second batteries (41, 42), the charger (51) being disposed under the covering unit (1) and in front of the head tube (21) and being fastened to said head tube (21), and
a socket (52) that is disposed at said covering unit (1) and that is connected electrically to said charger (51).

2. The electric vehicle as claimed in claim 1, **characterized in that**:
said frame unit (2) further includes a pair of spaced-apart retaining plates (234) interconnecting said floorboard connecting segments (232) of said side tubes (23) and cooperating with said floorboard connecting segments (232) to define a first receiving space (235) in which said first battery (41) is retained; and
said supporting segments (233) of said side tubes (23) cooperate with each other to define a second receiving space (236) under said seat (3), said second battery (42) being retained in said second receiving space (236).

3. The electric vehicle as claimed in claim 1, further **characterized by** a relay (8) interconnecting electrically said charger (51) and said first and second batteries (41, 42), and a control device (9) connected electrically to said relay (8) for controlling charging of one of said first and second batteries (41, 42) via said relay (8).

4. The electric vehicle as claimed in claim 1, **characterized in that** said first battery (41) is horizontally disposed, and said second battery (42) is vertically disposed.

5. The electric vehicle as claimed in claim 1, **characterized in that** said first battery (41) is horizontally disposed, and said second battery (42) is obliquely disposed.

6. The electric vehicle as claimed in claim 1, **characterized in that** said frame unit (2) further includes a plurality of locking plates (24), each of which extends from said side tubes (23) and is formed with a first locking hole (241), said electric vehicle further including a plurality of locking members (7) that extend respectively through said first locking holes (241) for securing said locking plates (24) to said first battery (41).

7. The electric vehicle as claimed in claim 1, **characterized in that**:
said frame unit (2) further includes at least one support frame (25) mounted to said side tubes (23) and formed with at least one second locking hole (251);
said frame unit (2) further includes at least one locking member (7) extending through said at least one second locking hole (251) for securing said support frame (25) to said second battery (42); and
said second battery (42) has a projecting portion (421) disposed over and abutting against said support frame (25).

## Patentansprüche

1. Elektrofahrzeug, das Folgendes umfasst:
eine Abdeckeinheit (1),
eine Rahmeneinheit (2), die von der Abdeckeinheit (1) abgedeckt ist und ein Kopfrohr (21), ein Hauptrohr (22), das sicher an der Rückseite des Kopfrohrs (21) befestigt ist, und ein Paar von Seitenrohren (23), die jeweils ein absteigendes Segment (231) haben, das sicher mit dem Hauptrohr (22) verbunden ist, ein Fußbodenverbindungssegment (232), das sich von dem absteigenden Segment (231) rückwärts erstreckt, und ein Stützsegment (233), das sich von dem Fußbodenverbindungssegment (232) rückwärts und aufwärts erstreckt, aufweist;
einen Sitz (3), der auf die Abdeckeinheit (1) montiert und oberhalb der Stützsegmente (233) der Seitenröhren (23) angeordnet ist;
eine Stromversorgungseinheit (4), die eine erste Batterie (41) aufweist, die mit den Fußbodenverbindungsegmenten (232) der Seitenrohre (23) verbunden ist, und eine zweite Batterie (42), die unter dem Sitz (3) angeordnet und elektrisch mit der ersten Batterie (41) verbunden ist;
**dadurch gekennzeichnet, dass** es ferner eine Aufladeeinheit (5) umfasst, die Folgendes aufweist:
einen Auflader (51) zum Aufladen der ersten und zweiten Batterie (41, 42), wobei der Auflader (51) unter der Abdeckeinheit (1) und vor dem Kopfrohr (21) angeordnet und an dem Kopfrohr (21) befestigt ist, und
eine Fassung (52), die an der Abdeckeinheit (1) angeordnet und elektrisch mit dem Auflader (51) verbunden ist.

2. Elektrofahrzeug nach Anspruch 1, **dadurch gekennzeichnet, dass**:
die Rahmeneinheit (2) ferner ein Paar beabstandeter Halteplatten (234) aufweist, das die Fußbodenverbindungsegmente (232) der Seitenrohre (23) miteinander verbindet und mit den Fußbodenverbindungsegmenten (232) zusammenwirkt, um einen ersten Aufnahmeraum (235), in dem die erste Batterie (41) gehalten wird, zu definieren, und
die Stützsegmente (233) der Seitenrohre (23) miteinander zusammenwirken, um einen zweiten Aufnahmeraum (236) unter dem Sitz (3) zu definieren, wobei die zweite Batterie (42) in dem zweiten Aufnahmeraum (236) gehalten wird.

3. Elektrofahrzeug nach Anspruch 1, ferner **gekennzeichnet durch** ein Relais (8), das den Auflader (51) und die erste und zweite Batterie (41, 42) elektrisch verbindet, und eine Steuervorrichtung (9), die elektrisch mit dem Relais (8) verbunden ist, um das Aufladen der ersten oder zweiten Batterie (41, 42) über das Relais (8) zu steuern.

4. Elektrofahrzeug nach Anspruch 1, **dadurch gekennzeichnet, dass** die erste Batterie (41) horizontal angeordnet ist und die zweite Batterie (42) vertikal angeordnet ist.

5. Elektrofahrzeug nach Anspruch 1, **dadurch gekennzeichnet, dass** die erste Batterie (41) horizontal angeordnet ist, und dass die zweite Batterie (42) schräg angeordnet ist.

6. Elektrofahrzeug nach Anspruch 1, **dadurch gekennzeichnet, dass** die Rahmeneinheit (2) ferner eine Mehrzahl von Verriegelungsplatten (24) aufweist, die sich jeweils von den Seitenrohren (23) erstreckt und mit einer ersten Verriegelungsbohrung (241) ausgebildet ist, wobei das Elektrofahrzeug ferner eine Mehrzahl von Verriegelungselementen (7) aufweist, die sich jeweils durch die ersten Verriegelungsbohrungen (241) erstreckt, um die Verriegelungsplatten (24) an der ersten Batterie (41) zu befestigen.

7. Elektrofahrzeug nach Anspruch 1, **dadurch gekennzeichnet, dass**:
die Rahmeneinheit (2) ferner mindestens einen Stützrahmen (25) aufweist, der an die Seitenrohre (23) montiert ist und mit mindestens einer zweiten Verriegelungsbohrung (251) ausgebildet ist;
wobei die Rahmeneinheit (2) ferner mindestens ein Verriegelungselement (7) aufweist, das sich durch die mindestens eine zweite Verriegelungsbohrung (251) erstreckt, um den Stützrahmen (25) an der zweiten Batterie (42) zu befestigen; und
die zweite Batterie (42) einen vorstehenden Abschnitt (421) hat, der über dem Stützrahmen (25) und gegen ihn anschlagend angeordnet ist.

## Revendications

1. Véhicule électrique comprenant :
une unité de recouvrement (1) ;
une unité de cadre (2) recouverte par ladite unité de recouvrement (1) et comportant un tube de direction (21), un tube principal (22) qui est monté fixe à un côté arrière dudit tube de direction (21), et une paire de tubes latéraux (23), dont chacun a un segment descendant (231) monté fixe audit tube principal (22), un segment de raccordement de plancher (232) s'étendant vers l'arrière depuis ledit segment descendant (231), et un segment de support (233) s'étendant vers l'arrière et vers le haut depuis ledit segment de raccordement de plancher (232) ;
une selle (3) montée sur ladite unité de recouvrement (1) et disposée au-dessus desdits segments de support (233) desdits tubes latéraux (23) ;
un bloc d'alimentation (4) comportant une première batterie (41) qui est couplée auxdits segments de raccordement de plancher (232) desdits tubes latéraux (23) et une seconde batterie (42) qui est disposée sous ladite selle (3) et qui est raccordée électriquement à ladite première batterie (41) ;
**caractérisé en ce qu'**il comprend en outre une unité de charge (5) comportant :
un chargeur (51) pour charger lesdites première et seconde batteries (41, 42), le chargeur (51) étant disposé sous l'unité de recouvrement (1) et à l'avant du tube de direction (21) et étant fixé audit tube de direction (21), et
une prise (52) qui est disposée au niveau de ladite unité de recouvrement (1) et qui est raccordée électriquement audit chargeur (51).

2. Véhicule électrique selon la revendication 1, **caractérisé en ce que** :
ladite unité de cadre (2) comporte en outre une paire de plaques de retenue espacées (234) reliant lesdits segments de raccordement de plancher (232) desdits tubes latéraux (23) et coopérant avec lesdits segments de raccordement de plancher (232) pour définir un premier espace de réception (235) dans lequel est retenue ladite première batterie (41) ; et
lesdits segments de support (233) desdits tubes latéraux (23) coopèrent l'un avec l'autre pour définir un second espace de réception (236) sous ladite selle (3), ladite seconde batterie (42) étant retenue dans ledit second espace de réception (236).

3. Véhicule électrique selon la revendication 1, **caractérisé en outre par** un relais (8) interconnectant électriquement ledit chargeur (51) et lesdites première et seconde batteries (41, 42), et un dispositif de commande (9) raccordé électriquement audit relais (8) pour commander la charge de l'une desdites première et seconde batteries (41, 42) via ledit relais (8).

4. Véhicule électrique selon la revendication 1, **caractérisé en ce que** ladite première batterie (41) est disposée horizontalement, et ladite seconde batterie (42) est disposée verticalement.

5. Véhicule électrique selon la revendication 1, **caractérisé en ce que** ladite première batterie (41) est disposée horizontalement, et ladite seconde batterie (42) est disposée obliquement.

6. Véhicule électrique selon la revendication 1, **caractérisé en ce que** ladite unité de cadre (2) comporte en outre une pluralité de plaques de verrouillage (24), dont chacune s'étend depuis lesdits tubes latéraux (23) et est formée avec un premier trou de verrouillage (241), ledit véhicule électrique comportant en outre une pluralité d'organes de verrouillage (7) qui s'étendent respectivement à travers lesdits premiers trous de verrouillage (241) pour arrimer lesdites plaques de verrouillage (24) à ladite première batterie (41).

7. Véhicule électrique selon la revendication 1, **caractérisé en ce que** :
ladite unité de cadre (2) comporte en outre au moins un cadre de support (25) monté sur lesdits tubes latéraux (23) et formé avec au moins un second trou de verrouillage (251) ;
ladite unité de cadre (2) comporte en outre au moins un organe de verrouillage (7) s'étendant à travers ledit au moins un second trou de verrouillage (251) pour arrimer ledit cadre de support (25) à ladite seconde batterie (42) ; et
ladite seconde batterie (42) a une portion saillante (421) disposée sur et butant contre ledit cadre de support (25).
